# EUROPEAN PATENT APPLICATION

(11) **EP 4 197 976 A1**
(43) Date of publication of application: **21.06.2023**
(21) Application number: 22865917.3
(22) Date of filing: 06.10.2022
(51) Int. Cl.: C02F 3/34, C02F 3/10, C02F 3/30

(54) **SEWAGE/WASTEWATER TREATMENT SYSTEM USING AMINO ACID FERMENTATION MICROORGANISMS**

(30) Priority: 19.10.2021 KR 20210139163
(71) Applicant: CJ Cheiljedang Corporation, Seoul 04560 (KR)
(72) Inventor: KANG, Min Koo, Seoul 04560 (KR); SHIN, Seung Ho, Seoul 04560 (KR); KIM, Min Jun, Seoul 04560 (KR); KIM, So Young, Seoul 04560 (KR)
(74) Representative: Müller Schupfner & Partner Patent- und Rechtsanwaltspartnerschaft mbB
(86) International application number: PCT/KR2022/015066
(87) International publication number: WO 2023/068608

(57) **Abstract**

The present disclosure relates to a hybrid type wastewater treatment system using amino acid fermentation microorganisms, and more particularly to a hybrid type wastewater treatment system using amino acid fermentation microorganisms, whereby a nitrification reaction can be stably performed even when high-concentration ammonia nitrogen is introduced.

Provided is a wastewater treatment system for treating wastewater, the wastewater treatment system including: a pre-treatment portion into which wastewater is introduced and which includes a fermentation microorganism reaction tank in which amino acid fermentation microorganisms are accommodated; and a nitrification portion including a nitrification tank, which is connected to a rear end of the fermentation microorganism reaction tank and into which wastewater is introduced and in which nitrification microorganisms are accommodated.

## Description

### TECHNICAL FIELD

The present disclosure relates to a hybrid type wastewater treatment system using amino acid fermentation microorganisms, and more particularly to a hybrid type wastewater treatment system using amino acid fermentation microorganisms, whereby a nitrification reaction can be stably performed even when high-concentration ammonia nitrogen is introduced.

### BACKGROUND ART

Nitrogen and phosphorus cause eutrophication, coastal red tides, ammonia fish toxin, and dissolved oxygen deficiency in water, and ammonia increases chlorine requirements, and nitrate nitrogen may be harmful to health when nitrate nitrogen is present in high concentrations in drinking water.

Also, when algae grow excessively due to the inflow of nitrogen and phosphorus into a water supply source, there are problems such as unpleasant taste and smell in tap water and clogging of a sand filter, which is a water purification process.

Thus, a process for removing nitrogen and phosphorus is being performed in a wastewater treatment facility that purifies wastewater, sewage, city sewage, livestock wastewater, *etc.* generated in an amino acid production process.

In the above-described wastewater treatment facility, nitrogen is removed using a nitrification reaction. The nitrification reaction refers to a process in which ammonia nitrogen is changed into nitrate nitrogen via nitrite nitrogen by nitrification microorganisms under aerobic conditions.

However, when high-concentration ammonia nitrogen generated in an amino acid manufacturing process is introduced into the wastewater treatment facility, the nitrification reaction cannot be stably performed, and nitrification reaction efficiency is lowered.

In addition, the size of a bioreactor (an aeration tank for inducing nitrification) is required to be increased to treat high-concentration ammonia nitrogen so that the overall scale of a wastewater treatment plant is increased, and a long hydraulic residence time (*e*.*g*., 24 hours) is required, and large investment costs are required.

The technology that is the background of the present application is disclosed in Korean Patent Registration Publication No. 10-0701524.

### DETAILED DESCRIPTION OF THE INVENTION

### TECHNICAL PROBLEM

The present disclosure has been devised to solve the above problems. The present disclosure provides a wastewater treatment system using amino acid fermentation microorganisms, whereby a nitrification reaction can be stably performed during a short hydraulic residence time (*e*.*g*., 6 hours) even when high-concentration ammonia nitrogen is introduced and the size of a bioreactor is required to be decreased, and investment costs for a wastewater treatment plant can be reduced.

### TECHNICAL SOLUTION

According to an aspect of the present disclosure, there is provided a wastewater treatment system for treating wastewater, the wastewater treatment system including: a pre-treatment portion into which wastewater is introduced and which includes a fermentation microorganism reaction tank in which amino acid fermentation microorganisms are accommodated; and a nitrification portion comprising a nitrification tank, which is connected to a rear end of the fermentation microorganism reaction tank and into which wastewater is introduced and in which nitrification microorganisms are accommodated.

The wastewater treatment system may further include: a phosphorous discharge portion comprising a phosphorous discharge tank, which is connected to a front end of the fermentation microorganism reaction tank in which dephosphorization microorganisms are accommodated; and a separation portion, which is connected to a rear end of the phosphorous discharge tank, is connected to a front end of the fermentation microorganism reaction tank and separates an aggregated sludge.

At least one of the pre-treatment portion and the nitrification portion may be provided with a filter medium on which microorganisms are attached-grown, and the filter medium may be a biodegradable plastic material.

1 mL to 30 mL of amino acid fermentation microorganisms in the fermentation microorganism reaction tank may be used per 1 L of wastewater when fermentation microorganisms are injected into the fermentation microorganism reaction tank.

### EFFECTS OF THE INVENTION

The present disclosure having the above-described configuration and features has effects of stably performing a nitrification reaction even when high-concentration ammonia nitrogen is introduced.

### DESCRIPTION OF THE DRAWINGS

FIG. 1 is a schematic block diagram for explaining a wastewater treatment system according to an embodiment of the present disclosure;
FIG. 2 is a schematic block diagram for explaining a wastewater treatment system according to another embodiment of the present disclosure;
FIG. 3 is a view for explaining a nitrification portion according to a first embodiment;
FIG. 4 is a view for explaining a nitrification portion according to a second embodiment;
FIG. 5 is a view for explaining a nitrification portion according to a third embodiment;
FIG. 6 is a view for explaining a nitrification portion according to a fourth embodiment;
FIG. 7 is a view for explaining a nitrification portion according to a fifth embodiment;
FIG. 8 is a view for explaining the elution of an organic material of aPHA in distilled water;
FIG. 9 is a graph showing ammonia nitrogen removal velocity according to the amount of fermentation microorganisms injected;
FIG. 10 is a graph for explaining that nitrate nitrogen is reduced as aPHA is added to activated sludge;
FIG. 11 is a graph for explaining aPHA that continuously elutes an organic material; and
FIG. 12 is a graph for explaining aPHA that can rapidly increase the amount of microorganisms in wastewater.

### MODE OF THE INVENTION

The present disclosure can have various changes and can have various forms and thus, implementation examples (aspects) (or embodiments) will be described in detail in the description. However, this is not intended to limit the present disclosure to a specific disclosure form, and it should be understood to include all modifications, equivalents, and substitutes included in the spirit and scope of the present disclosure.

The terms used herein are only used to describe a specific embodiment (aspect) (or embodiment), and are not intended to limit the present disclosure. Singular expressions include plural expressions unless the context clearly dictates otherwise. In the present application, terms such as "includes ..." or "comprises ..." are intended to designate that the features, numbers, steps, operations, components, parts, or combinations thereof described in the specification are present, but it should be understood that this does not preclude the possibility of the presence or addition of one or more other features, numbers, steps, operations, components, parts, or combinations thereof.

Unless defined otherwise, all terms used herein, including technical or scientific terms, have the same meaning as commonly understood by one of ordinary skill in the art to which the present disclosure belongs. Terms such as those defined in commonly used dictionaries should be interpreted as having a meaning consistent with the meaning in the context of the related art and are not interpreted in an ideal or excessively formal meaning unless explicitly defined in the present application.

The terms such as first, second, *etc.* described in the present specification are only to be referred to distinguish that they are different components, and are not limited to the order of manufacture, and the names thereof may not match in the detailed description and claims of the invention.

Throughout the present specification, when a certain portion is said to be "connected" to another portion, it is not only "directly connected (communicating)", but also "indirectly connected (communicating)" to another element interposed therebetween.

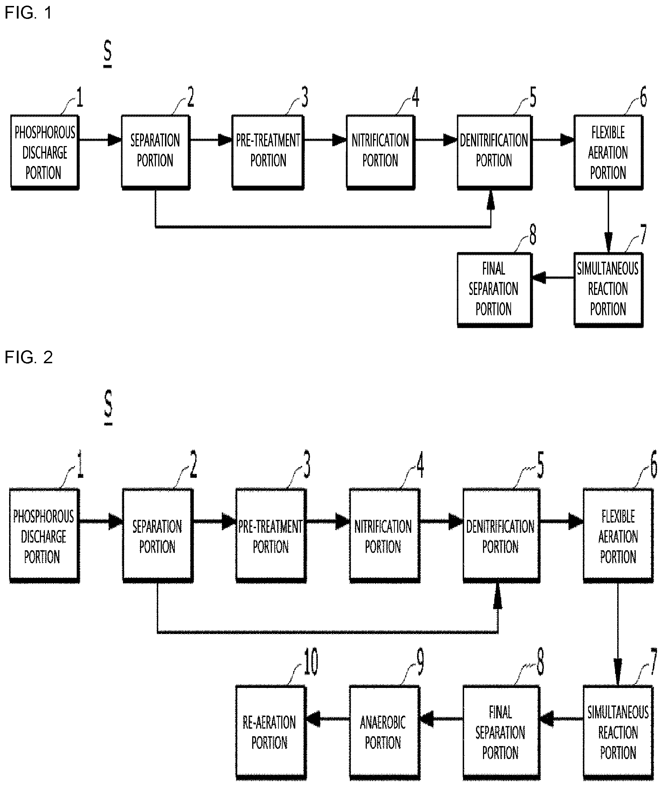

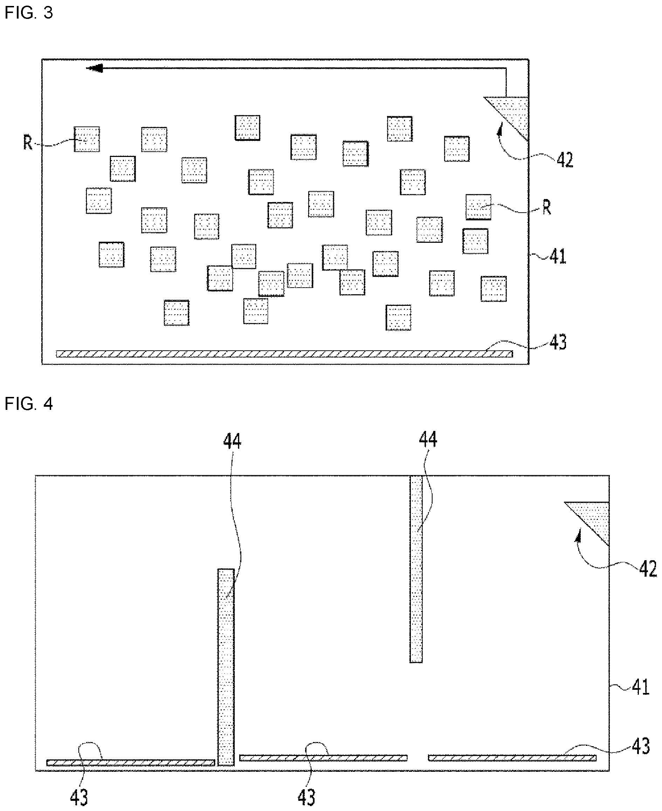

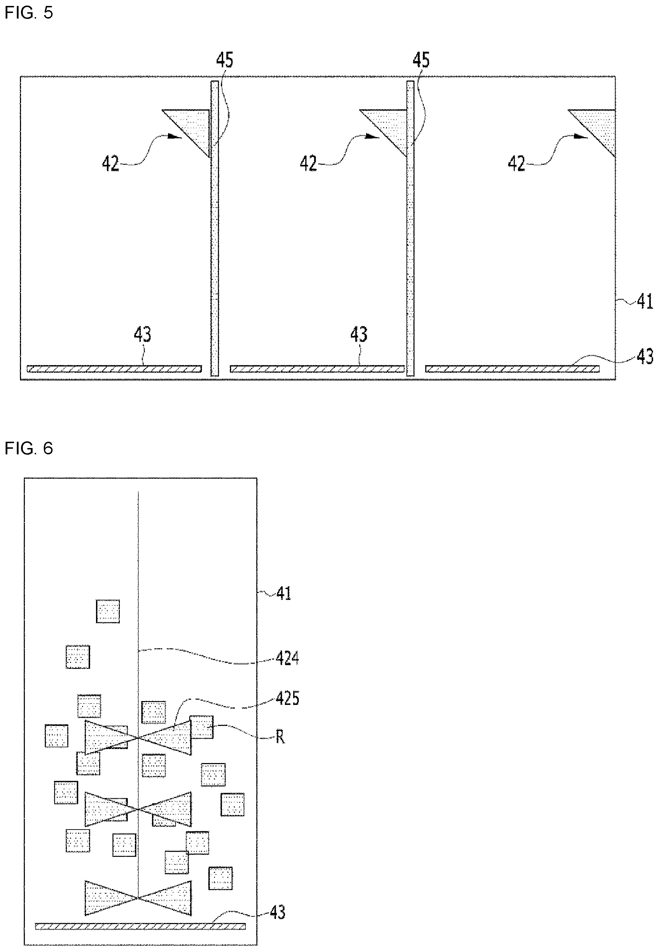

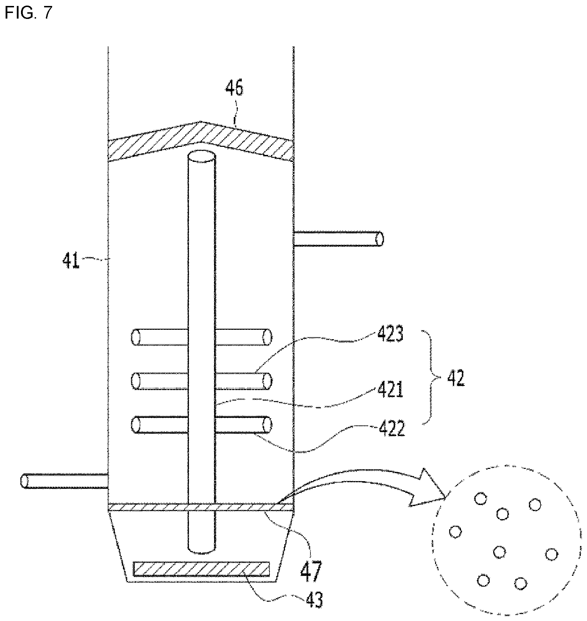

FIG. 1 is a schematic block diagram for explaining a wastewater treatment system according to an embodiment of the present disclosure, FIG. 2 is a schematic block diagram for explaining a wastewater treatment system according to another embodiment of the present disclosure, FIG. 3 is a view for explaining a nitrification portion according to a first embodiment, FIG. 4 is a view for explaining a nitrification portion according to a second embodiment, FIG. 5 is a view for explaining a nitrification portion according to a third embodiment, FIG. 6 is a view for explaining a nitrification portion according to a fourth embodiment, and FIG. 7 is a view for explaining a nitrification portion according to a fifth embodiment.

A wastewater treatment system S (hybrid type wastewater treatment system utilizing amino acid fermentation microorganisms, Cheil Jedang Separated Nitrification Reactor (CJ-SNR) method) according to the present disclosure is used to effectively remove nitrogen from wastewater, sewage, municipal sewage, livestock production generated in an amino acid production process, *etc.*

In particular, the wastewater treatment system S according to the present disclosure is to maintain nitrification efficiency even when high-concentration ammonium nitrogen is introduced, and hereinafter it is referred to as the "present system" for convenience of explanation.

Referring to FIGS. 1 and 2, the present system (wastewater treatment system S, a hybrid type wastewater treatment system using amino acid fermentation microorganisms) includes a pre-treatment portion 3 and a nitrification portion 4.

First, the nitrification portion 4 includes a nitrification tank 41 (see FIGS. 3 through 7), which is connected to a rear end of a fermentation microorganism reaction tank of the pre-treatment portion 3 to be described later and into which the above-described wastewater that is an object to be purified (decomposed) is introduced and in which nitrification microorganisms are accommodated.

For example, the nitrification microorganisms may be ammonia oxidation microorganisms such as *Nitrosomonas* or nitrite oxidation microorganisms such as *Nitrobacter,* and may be obtained through nitrification by oxidizing ammonia nitrogen in wastewater introduced into the pre-treatment portion 3 to be described later connected to a front end of the nitrification portion 4 under aerobic conditions.

That is, in the nitrification portion 4, ammonia nitrogen is changed into nitrate nitrogen through nitrite nitrogen by nitrification microorganisms under aerobic conditions.

The above-described nitrification portion 4 includes a device (*e*.*g*., an injection device, *etc.)* for injecting air into the nitrification tank 41 in which the nitrification microorganisms are accommodated, which will be described in more detail in the following description.

At least part of ammonia nitrogen in the wastewater is removed in the nitrification portion 4, and generated nitric acid is treated by denitrification or the like in a process to be described later.

On the other hand, when the wastewater is introduced into the above-described nitrification tank 41, in the case where ammonia nitrogen concentration is excessively higher than the amount of the nitrification microorganisms in the nitrification tank 41, the nitrification portion 4 does not sufficiently perform nitrification of ammonia nitrogen.

Thus, the present system includes the pre-treatment portion 3 including a fermentation microorganism reaction tank, which is connected to the front end of the nitrification tank 41 and in which amino acid fermentation microorganisms are accommodated.

Here, the front and rear ends are based on the movement direction of the wastewater (influent) to be treated in the present system, and the wastewater moves from the front to the rear in the present system.

Wastewater is introduced into the above-described fermentation microorganism reaction tank, the wastewater flowing into the fermentation microorganism reaction tank is wastewater that has passed through a separation portion 2 to be described later, and the wastewater injected into the above-described nitrification portion 4 is wastewater that has passed through the pre-treatment portion 3.

Amino acid fermentation refers to a process of fermentation and producing a large amount of amino acids (lysine, *etc.)* using a nitrogen source or the like, and fermentation microorganisms are used in the above-described amino acid fermentation production process.

Examples of the above-described fermentation microorganisms (amino acid fermentation microorganisms) include *Micrococcus, Bacillus, Brevibacterium, Corynebacterium, Pseudomonas,* and the like.

When the wastewater containing high-concentration ammonium nitrogen is introduced into the fermentation microorganism reaction tank in which the fermentation microorganisms are accommodated, the above-described fermentation microorganisms consume ammonium nitrogen, and cells grow.

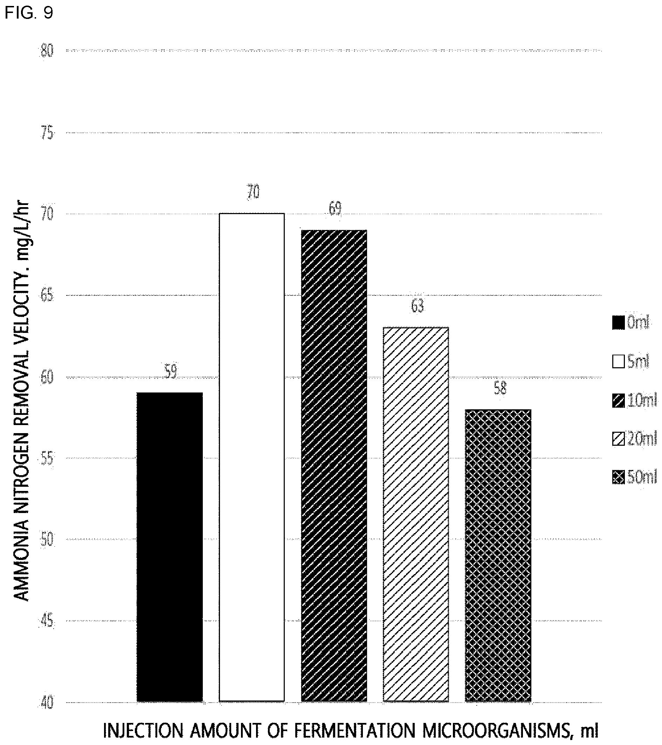

FIG. 9 shows ammonia nitrogen removal velocity according to the injection amount of the fermentation microorganisms (*e*.*g*., *Corynebacterium glutamicum*), and it can be confirmed that when 5 mL of fermentation microorganisms is used per 1 L of wastewater injected into the fermentation microorganism reaction tank, nitrogen removal velocity is 70 mg/L per hour.

Referring to FIG. 9, when 50 mL of fermentation microorganisms are used per 1 L of wastewater injected into the fermentation microorganism reaction tank, there is no significant difference in the ammonia nitrogen removal velocity compared to when the fermentation microorganisms are not used, and preferably, 1 mL to 30 mL of fermentation microorganisms may be used per 1 L of wastewater when fermentation microorganisms are injected into the fermentation microorganism reaction tank. More preferably, 3 mL to 15 mL of fermentation microorganisms are used per 1 L of wastewater.

Thus, even if the wastewater contains high-concentration ammonium nitrogen, the present system has the advantage of maintaining the nitrification efficiency of the nitrification portion 4 provided at the rear end because the concentration of ammonia nitrogen in the wastewater is lowered through the fermentation microorganisms.

That is, because the concentration change of ammonia nitrogen in the wastewater flowing into the nitrification portion 4 may be reduced without a large change in the amount of nitrification microorganisms described above in the nitrification portion 4 connected to the rear end of the pre-treatment portion 3, lowering of the nitrification efficiency may be suppressed.

Referring to FIGS. 1 and 2, the present system may include a phosphorous discharge portion 1, which is connected to the front end of the fermentation microorganisms and includes a phosphorous discharge tank in which dephosphorization microorganisms are accommodated. The dephosphorization microorganisms may be, for example, polyphosphoric acid accumulation microorganisms.

When there is phosphorous in the water, eutrophication, *etc.* occurs. The present system reacts the dephosphorization microorganisms with the wastewater in the phosphorous discharge tank through the phosphorous discharge portion 1, and discharges phosphorus from the wastewater.

Exemplarily explaining the phosphorous discharge mechanism by the dephosphorization microorganisms, the orthophosphoric acid is taken in by the dephosphorization microorganisms and accumulated as polyphosphoric acid in the cell while undergoing an anaerobic state and a continuous aerobic state, and the polyphosphoric acid accumulated in the cell in the anaerobic state is hydrolyzed and discharged with orthophosphoric acid as a mixed solution, and the organic material in a mixed solution (wastewater) is taken into the cell.

A substrate stored in the cell in the aerobic state is oxidized, decomposed and reduced, and the dephosphorization microorganisms take in orthophosphoric acid discharged in the anaerobic state by using energy generated at this time and resynthesize the orthophosphoric acid into polyphosphoric acid. As the above-described process is repeated, excessive intake of phosphorus in the wastewater occurs.

The above-described phosphorous discharge mechanism has been described as an example, and it is obvious that the present disclosure is not limited to the above-described process and phosphorus may be removed through various processes.

The present system may include the separation portion 2, which is connected to the rear end of the phosphorous discharge tank and is connected to the front end of the fermentation microorganism reaction tank and separates a sludge aggregated in the wastewater (sludge formed by aggregating dephosphorization microorganisms grown and propagated by taking in an organic material or by microorganisms adsorbed by the organic material in the phosphorous discharge tank through biosorption). For example, the separation portion 2 may be a precipitation tank or a solid-liquid separation tank.

The organic material precipitated and separated in the separation portion 2 may be transferred to the denitrification portion 5 and used for the denitrification reaction. Because, in the separation portion 2, the wastewater from which the microorganisms adsorbed with the organic material are separated in the phosphorous discharge tank are treated through the pre-treatment portion 3 and the nitrification portion 5, in conclusion, the fermentation microorganisms, the nitrification microorganisms, and the organic material oxidation microorganisms are separated and grown, the present system is a hybrid type wastewater treatment system that is different from a single sludge method that uses one precipitation tank.

In this way, the present system may minimize side effects (eutrophication, *etc.)* caused by phosphorus by removing phosphorus from the wastewater including the phosphorous discharge tank.

In addition, as will be described in more detail in the following description, because a particulate organic material and some dissolved organic materials are separated in the phosphorous discharge portion 1, the amount of organic material in the nitrification portion 4 may be further reduced, so that a nitrification microorganism fraction can be further improved. This means that nitrification efficiency can be further improved.

Referring to FIGS. 1 through 7, at least one of the pre-treatment portion 3 and the nitrification portion 4 may be provided with a filter medium R on which microorganisms (fermentation microorganisms or nitrification microorganisms) are attached-grown. That is, at least one of the fermentation microorganism reaction tank and the nitrification tank 41 into which the wastewater is introduced may be provided with the above-described filter medium R.

In addition, it is obvious that the above-described phosphorous discharge tank may also be provided with the filter medium R on which microorganisms (dephosphorization microorganisms) are attached-grown.

Thus, because the fermentation microorganisms, the nitrification microorganisms and the dephosphorization microorganisms may be attached-grown and may be separated from the suspended-growth organic material oxidation microorganisms and may grow, the growth of the fermentation microorganisms, the nitrification microorganisms, and the dephosphorization microorganisms may be maximized.

In general, in the distribution of microorganisms in activated sludge in a biological wastewater treatment method, the organic material oxidation microorganisms are about 95%, and the nitrification microorganisms are about 5%. As the concentration of the organic material in wastewater (influent water) increases, the distribution of the organic material oxidation microorganisms increases.

However, as described above, the present system removes phosphorus through the phosphorous discharge portion 1 and simultaneously reduces the amount of organic material, and attached-grows nitrification microorganisms using the filter medium R (carrier) and separates the attached-grown nitrification microorganisms from the suspended-growth organic material oxidation microorganisms, thereby increasing the fraction of nitrification microorganisms to about 8-10% and thus nitrification efficiency can be further improved.

In other words, because the present system is a hybrid type wastewater treatment system using suspended growth microorganisms and attached growth microorganisms, nitrogen and phosphorus can be effectively treated even at a short hydraulic residence time, frequent fluctuations in inflow load, and at low temperatures such as in winter.

On the other hand, the above-described filter medium R may be a biodegradable plastic material. Examples of filter mediums may include at least one of polylactic acid (PLA), polybutylene adipate terephthalate (PBAT), thermoplastic starch (TPS), polyhydroxyl alkanoate (PHA), aliphatic polyester (AP), polybutylene succinate Nitrate (PBS), polyethylene succinate (PES), polyvinyl alcohol (PVA), and polycaprolactone (PCL).

The filter medium R may be preferably polyhydroxy alkanoate (PHA).

The above-described biodegradable plastic refers to a plastic that is completely decomposed into water, carbon dioxide, methane gas, biomass, *etc.* by microorganisms within several months to several years by simply burying the biodegradable plastic without incineration at the time of disposal.

As described above, nitrification microorganisms are attached to and grown on the filter medium R, but a member used for attached growth (object compared to the filter medium R of the present system) performs a role only for attached growth of microorganisms (e.g., nitrification microorganisms). However, because the filter medium R used in the present system is a biodegradable plastic material, the filter medium R serves not only for the attached growth of microorganisms, but also may be used for food for organic materials eluted in the biodegradation process of the filter medium R.

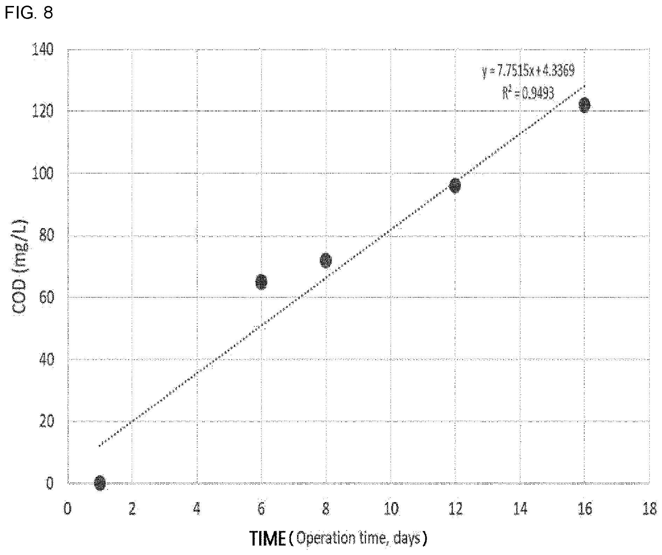

Referring to FIG. 8 (elution amount of organic material of aPHA per day under distilled water conditions), it can be confirmed that a chemical oxygen demand (COD) per 1 L of distilled water increases over time. COD elution concentration per day is 7.75 mg/L, and COD elution amount per day and per 1 g of the filter medium R is 0.1 mg/g.

As described above, the filter medium R may be preferably polyhydroxyl alkanoate (PHA). When the filter medium R is a PHA material, aPHA may be injected into a fat removal tank and may be used for attached growth and food for microorganisms that grow under anaerobic and anaerobic conditions. In addition, scPHA is put into the nitrification tank 41 into which air is injected, so that scPHA can be used for attached growth and food for aerobic microorganisms.

In other words, in the present system, the filter medium R is not only for the attached growth of microorganisms like a member used for attached growth according to the related art described above, but elutes an organic material, so that the filter medium R may supply food to the microorganisms.

Thus, because the growth and proliferation of nitrification microorganisms, *etc.* can be made more effectively, the attachment velocity of microorganisms is faster than the member used for the attached growth according to the related art described above, so that stable treatment efficiency can be maintained even with load fluctuations such as high concentration. In addition, because the filter medium R is biodegradable, post-treatment is also easy.

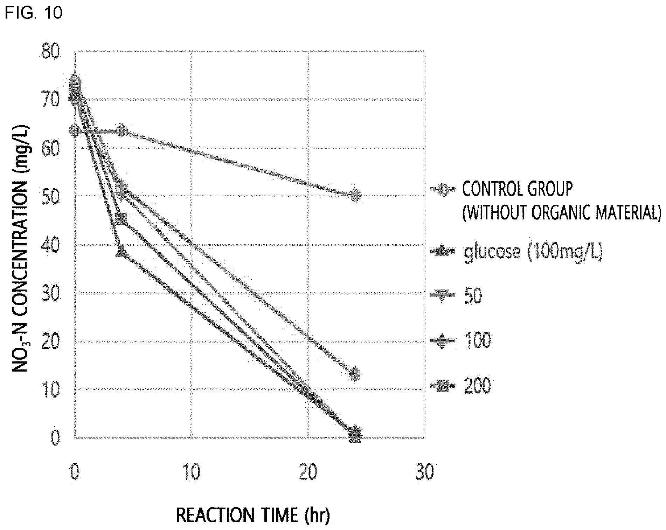

The above-described effect can be confirmed through FIG. 10, which is a graph showing that nitrate nitrogen is removed when aPHA is put into activated sludge. Referring to FIG. 10, it can be confirmed that aPHA has an effect corresponding to glucose (nitrate nitrogen removal effect) compared to a control group without an organic material, so it can be confirmed that aPHA can be utilized as an organic material source for denitrification.

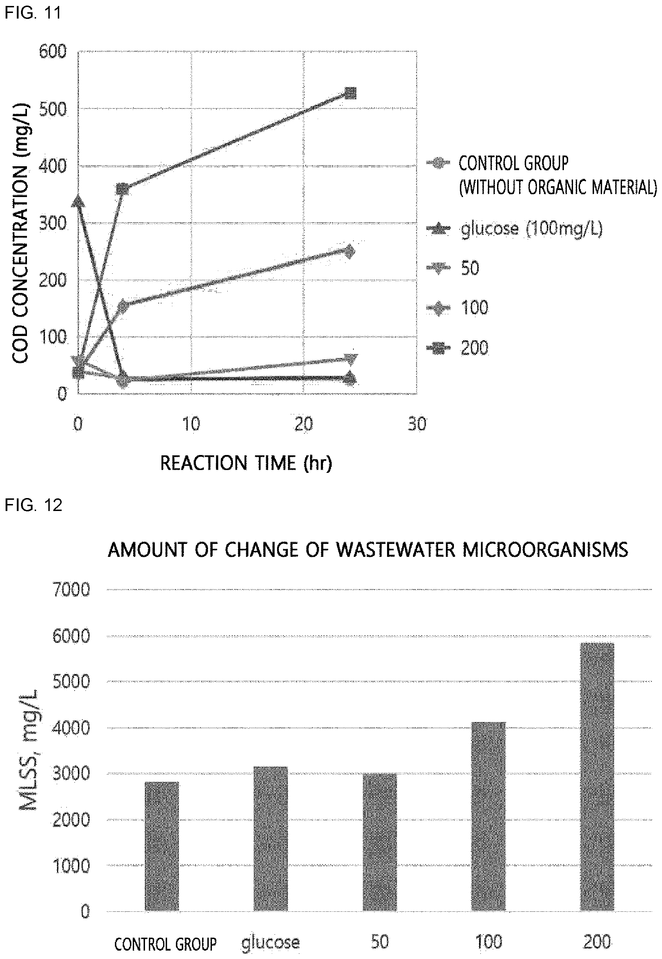

Also, FIG. 11 shows COD concentration according to the reaction time of a control group without an organic material, glucose, and aPHA. Referring to FIG. 11, it can be confirmed that in the case of glucose as an external carbon source, an organic material source is consumed over time and thus additional input is required over time. However, it can be confirmed that in the case of aPHA, an organic material is continuously eluted over time and thus, additional input is not required and there is no economic effect.

In addition, FIG. 12 shows the amount of change of wastewater microorganisms (e.g., nitrification microorganisms, *etc.)* according to the injection amount. In the case of using glucose, *etc.*, when it is necessary to increase the concentration of wastewater microorganisms rapidly, such as when high-concentration wastewater temporarily flows during wastewater treatment operations, the wastewater microorganisms cannot be easily increased even if a separate chemical is added. However, referring to FIG. 12, it can be confirmed that, in the case of aPHA, the amount of wastewater microorganisms can be increased by about 40% within 24 hours as the input amount is increased, so that it can be used as a method of rapidly increasing wastewater treatment microorganisms during initial seeding of microorganisms in wastewater treatment plants.

Hereinafter, the nitrification portion 4 for performing nitrification of ammonia nitrogen will be described in more detail.

Referring to FIGS. 3 through 7, the nitrification portion 4 may include a circulation device 42 that is provided in the nitrification tank 41 and circulates the filter medium R of the nitrification tank 41.

For example, the nitrification tank 41 includes a base and a sidewall portion extending upward from the edge of the base, and wastewater and nitrification microorganisms may be accommodated in an inner space formed by the base and the sidewall portion.

Here, the upper side (upper, upper end, upper surface, *etc.)* refers to the upper side (upper, upper end, upper surface, *etc.)* with reference to FIG. 3, and the lower side (lower, lower end, lower surface, *etc.)* refers to the lower side (lower, lower end, lower surface) based on FIG. 3, which will be applied in the same manner in the following description.

The nitrification tank 41 may have an open top, or a cover 46 that is covered on the upper side of the sidewall portion so that the above-described inner space can be covered.

In this case, the circulation device 42 may be provided on the sidewall portion as an example. The circulation device 42 may include, for example, a propeller connected to a motor to rotate, or an air supply device connected to a pump to inject air into the inner space.

Thus, the circulation device 42 prevents the nitrification tank 41 from being drawn to a part of the inner space and allows the filter medium R to be dispersed and disposed in a wider space in the nitrification tank 41. Thus, the nitrification microorganisms may be dispersed and grown in a wider space, and thus nitrification of ammonia nitrogen may be performed more effectively.

The above-described configuration of the circulation device 42 has been described as an example, and it is obvious that various configurations may be included as long as the filter medium R may be dispersed in the above-described inner space.

In addition, the nitrification portion 4 may include a supply device 43 (diffuser) for supplying gas to the nitrification tank 41. The supply device 43 may be provided on the base or connected to the lower end of the sidewall portion and provided below the nitrification tank 41.

The nitrification of ammonia nitrogen by the nitrification microorganisms is performed under aerobic conditions. Thus, it is preferable that a gas supplied by the supply device 43 to the nitrification tank 41 is air.

In this way, the nitrification portion 4 may supply oxygen to the nitrification microorganisms growing attached to the filter medium R, including the supply device 43, and improve the dispersibility of the filter medium R, and backwashing may be performed.

FIG. 4 is a view for explaining a semi-independent type nitrification portion 4 (nitrification portion 4 according to a second embodiment). Referring to FIG. 4, the nitrification portion 4 may include a locking member 44 provided to protrude inward from an inner side surface (the inner side surface of at least one of the base, sidewalls, and the cover 46).

The converging of the filter medium R from the nitrification tank 41 to any one part can be effectively suppressed through the locking member 44.

FIG. 5 is a view for explaining an independent type nitrification portion 4 (nitrification portion 4 according to a third embodiment). Referring to FIG. 5, the nitrification portion 4 may include a partition member 45 that is provided inside the nitrification tank 41 and partitions the nitrification tank 41 into a plurality of zones.

In this case, in the nitrification portion 4, the above-described circulation device 42 and the supply device 43 may be provided in each of the plurality of zones.

Thus, the converging of the filter medium R in the inner space of the nitrification tank 41 can be effectively suppressed.

Referring to FIG. 5, the nitrification portion 4 may include a measuring unit (not shown) for measuring ammonia nitrogen concentration of each of the plurality of zones, and a control unit (not shown) for controlling an operation of the supply device 43 provided in each of the plurality of zones according to the ammonia nitrogen concentration of each of the plurality of zones.

The measuring unit (not shown) may be, for example, an ammonia nitrogen meter sold on the market, and this is a known technique used in various fields, and a more detailed description thereof will be omitted.

The above-described control unit (not shown) may be applied to various control configurations known to those skilled in the art (e.g., various electronic devices or electronic modules such as computers and processors). For example, the control unit (not shown) may be configured to transmit a signal or command generated according to a program or algorithm included therein to the supply device 43. For example, the control unit (not shown) is included in the measuring unit (not shown) or the supply device 43 (diffuser), or provided separately from the measuring unit (not shown) and the supply device 43 (diffuser) in a position adjacent to the measuring unit (not shown) and the supply device 43 (diffuser) and thus may be connected to the measuring unit (not shown) and the supply device 43 (diffuser) in a wired or wireless manner.

For example, the measuring unit may measure the ammonia nitrogen concentration of each of a plurality of zones to generate measurement information including a measured value, and the measuring unit may receive the measurement information and compare the measured value with a preset reference value. When the measured value exceeds the preset reference value, the control unit may generate a control signal for controlling the supply device 43 to increase the air supply amount of any one of the plurality of zones having a measured value higher than the reference value.

In this way, the present system can control the amount of air supplied to the zone according to the ammonia nitrogen concentration of each of the plurality of zones of the nitrification tank 41 partitioned by the partition member 45, including the measuring unit and the control unit. That is, the nitrification efficiency can be improved and energy can be saved.

FIG. 6 is a view for explaining the nitrification portion 4 including the circulation device 42 including a stirring blade 425 (nitrification portion 4 according to a fourth embodiment).

The above-described circulation device 42 may include, for example, a stirring shaft 424 provided in the nitrification tank 41, and the stirring blade 425 provided to protrude in a radial direction with respect to the stirring shaft 424.

For example, the stirring shaft 424 may be provided to protrude in a vertical direction, and the stirring blade 425 may protrude from the stirring shaft 424 in a horizontal direction.

Thus, the filter medium R can be stirred, and impurities can be removed from the filter medium R by operating during backwashing.

FIG. 7 is a view for explaining the nitrification portion 4 (nitrification unit 4 according to a fifth embodiment) including the circulation device 42 including a pipe through which air is moved.

Referring to FIG. 7, the circulation device 42 may include a vertical pipe 421 provided in the nitrification tank 41 and disposed above the supply device 43.

For example, the nitrification portion 4 may include a strainer 47 that is provided in the nitrification tank 41 to partition the nitrification tank 41 into a lower portion and a middle portion and perforated so that upper and lower surfaces of the strainer 47 pass through the strainer 47, and the vertical pipe 421 may be installed through the strainer 47.

The strainer 47 may be configured to suppress the input of foreign substances toward the diffuser (supply device 43).

The circulation device 42 may include a first branch pipe 422 that extends in the horizontal direction from the vertical pipe 421 and communicates with the vertical pipe 421, and a second branch pipe 423 that extends in the horizontal direction from the vertical pipe 421, communicates with the vertical pipe 421 and is disposed above the first branch pipe 422.

Thus, the gas supplied from the supply device 43 (diffuser) can be easily supplied to various places inside the nitrification tank 41.

On the other hand, the nitrification portion 4 may include the cover 46 that covers the upper periphery of the sidewall portion, and the cover 46 may be inclined upward toward the inner side of the cover 46.

Here, the inner side refers to the central side of the nitrification tank 41 when viewed in a plan view.

Thus, it is easy to collect the suspended precipitate along a slope, so that the precipitate is easily drawn out later.

Referring to FIGS. 1 and 2, the present system may include a denitrification portion 5 that is connected to the rear end of the nitrification tank 41 and includes a denitrification tank in which the denitrification microorganisms are accommodated. Likewise, the filter medium R made of biodegradable plastic may be input to the denitrification tank.

Denitrification microorganisms are microorganisms that reduce nitrate nitrogen for respiration in anaerobic conditions and produce toxic nitric acid as nitrogen gas. The denitrification microorganism may be, for example, Bacillus.

In addition, the present system may include a flexible aeration portion 6 including an aeration tank connected to the rear end of the denitrification tank, a measuring unit for measuring the concentration of ammonia nitrogen in the aeration tank, and an injection unit for injecting air into the aeration tank according to the concentration of ammonia nitrogen.

Each of the measuring unit and the injection unit may include a configuration corresponding to each of the measuring unit and the control unit of the above-described nitrification portion 4. Thus, the configuration and operation method of the measuring unit and the injection unit will be replaced with the description of the measuring unit and the control unit of the nitrification unit 4 described above.

The flexible aeration portion 6 performs a process of accelerating digestion by injecting oxygen into microorganisms. According to the related art, air is injected intermittently in an on/off method. However, in this case, excessive pressure loss of the air injection device occurs, and unnecessary energy consumption may occur.

The flexible aeration portion 6 of the present system is configured to determine the concentration of ammonia nitrogen and inject air according to the concentration so as to overcome the problems of an intermittent aeration method according to the related art.

The present system may include a simultaneous reaction portion 7 connected to the rear end of the flexible aeration portion 6. The simultaneous reaction portion 7 is to perform the roles of denitrification of nitrate and degassing of nitrogen at the same time.

The present system may include a final separation tank 8 connected to the rear end of the simultaneous reaction portion 7. The final separation portion 8 may serve as a degassing tank at the rear end through a solid-liquid separation FPR flow by applying a membrane for example.

The present system may include an anaerobic portion 9 connected to the rear end of the final separation portion 8. The anaerobic portion 9 performs a process of denitrification residual nitrate by a post-denitrification method.

The present system may include a re-aeration portion 10 connected to the rear end of the anaerobic portion 9. The re-aeration portion 10 may perform nitrogen gas degassing and sludge stabilization processes.

The simultaneous reaction portion 7, the final separation portion 8, the anaerobic portion 9, and the re-aeration portion 10 are commonly used in the field, and a more detailed description thereof will be omitted.

Although not shown, the present system may further include an adsorption tank connected to the front or rear end of the nitrification tank 41, and an adsorption portion including iron oxide provided in the adsorption tank.

Wastewater is introduced into the adsorption tank, and the iron oxide forms iron ions in the water. The iron ions combine with a phosphorous compound to form iron phosphate particles, thereby adsorbing and removing phosphorus from wastewater without forming sludge.

Exemplarily, the adsorption portion may be connected to the front end of the phosphorous discharge portion 1 or may be connected to the rear end of the re-aeration portion 10.

While the present disclosure has been particularly shown and described with reference to exemplary embodiments thereof, it will be understood by those of ordinary skill in the art that various changes in form and details may be made therein without departing from the spirit and scope of the present disclosure as defined by the following claims.

**(Explanation of reference numerals)**

| | |
|---|---|
| wastewater treatment system: S | |
| phosphorous discharge portion: 1 | separation portion: 2 |
| pre-treatment portion: 3 | nitrification portion: 4 |
| nitrification tank: 41 | circulation device: 42 |
| vertical pipe: 421 | first branch pipe: 422 |
| second branch pipe: 423 | stirring shaft: 424 |
| stirring blade: 425 | supply device: 43 |
| locking member: 44 | partition member: 45 |
| cover: 46 | strainer: 47 |
| denitrification portion: 5 | flexible aeration portion: 6 |

## Claims

1. A wastewater treatment system for treating wastewater, the wastewater treatment system comprising:
a pre-treatment portion into which wastewater is introduced and which includes a fermentation microorganism reaction tank in which amino acid fermentation microorganisms are accommodated; and
a nitrification portion comprising a nitrification tank, which is connected to a rear end of the fermentation microorganism reaction tank and into which wastewater is introduced and in which nitrification microorganisms are accommodated.

2. The wastewater treatment system of claim 1, further comprising:
a phosphorous discharge portion comprising a phosphorous discharge tank, which is connected to a front end of the fermentation microorganism reaction tank in which dephosphorization microorganisms are accommodated; and
a separation portion, which is connected to a rear end of the phosphorous discharge tank, is connected to a front end of the fermentation microorganism reaction tank and separates an aggregated sludge.

3. The wastewater treatment system of claim 1, wherein at least one of the pre-treatment portion and the nitrification portion is provided with a filter medium on which microorganisms are attached-grown, and the filter medium is a biodegradable plastic material.

4. The wastewater treatment system of claim 1, wherein 1 mL to 30 mL of amino acid fermentation microorganisms in the fermentation microorganism reaction tank are used per 1 L of wastewater when fermentation microorganisms are injected into the fermentation microorganism reaction tank.
